# EUROPEAN PATENT APPLICATION

(11) **EP 4 674 669 A1**
(43) Date of publication of application: **07.01.2026**
(21) Application number: 25186194.4
(22) Date of filing: 30.06.2025
(51) Int. Cl.: B60L 3/00, A62C 3/00, B60L 50/64, B60L 50/75, B60L 58/18, B60L 58/24, B60L 58/40, F17C 13/04, F17C 13/12, H01M 10/48, H01M 10/613, H01M 10/625, H01M 50/30, H01M 50/35, H01M 50/383

(54) **IMPROVED SAFETY SYSTEM FOR A FUEL CELL VEHICLE**

(30) Priority: 02.07.2024 IT 202400015247
(71) Applicant: IVECO S.P.A., 10156 Torino (IT)
(72) Inventor: GROTTENTHALER, David, 10156 Torino (IT); FINKELSTEIN, David, 10156 Torino (IT)
(74) Representative: Studio Torta S.p.A.

(57) **Abstract**

Safety system (6) for a vehicle (1), the vehicle comprising at least a battery pack (5) and at least a tank (4) for storing a pressurized gas, the safety system (6) comprising at least one valve means (7) configured to assume at least a first position in which to deny the fluid communication between the tank (4) and the environment and a second position in which allow the fluid communication between the tank (4) and the environment, the valve means (7) being controlled to move between the first and second positions during a critical condition related to thermal runaway of the battery pack (5).

## Description

### CROSS-REFERENCE TO RELATED APPLICATIONS

This patent application claims priority from Italian patent application no. 102024000015247 filed on July 2, 2024, the entire disclosure of which is incorporated herein by reference.

### TECHNICAL FIELD

The present invention concerns a safety system for a vehicle, in particular for a fuel cell vehicle.

The present invention finds its preferred, although not exclusive, application in electric vehicle propelled by a fuel cell module. Reference will be made to this application by way of example below.

### BACKGROUND OF THE INVENTION

Vehicles tends to be more and more electrified in order to reduce their pollutant emissions. In detail, fuel cell modules are used for providing electrical energy to be used by electric motors to allow operation of vehicles.

As per se known, fuel cell modules use hydrogen to produce electricity via chemical oxidation reactions. Such hydrogen is typically stored at high pressure vessels (tanks) in gaseous form carried by the vehicle.

The produced electrical energy is stored in battery packs comprising rechargeable electrical batteries that allow exchange of electrical energy with operative elements of the vehicle such as electric machines that allow its traction or other functional systems such as air conditioning.

Such batteries are usually a variety of lithium ion or sodium ion batteries, or otherwise contain organic or combustible solvents and elements, often for use as electrolyte or solid-state conductive mediums.

Usually, such battery packs containing electrical batteries are housed in the vicinity of the hydrogen tanks. However, as is known, lithium ion and other batteries comprised of combustible elements, may be subject to thermal runaway. Due to thermal runaway the temperature of the electrical batteries may increase uncontrollably and may lead to fire.

In severe cases, the battery pack will fail to contain the fire, leading to exposed flames, heat, gases, sparks, explosions, and other deleterious impacts on the vehicle.

Due to the often close proximity of the battery packs to the hydrogen tanks, such increased temperature/fire may lead to high temperature (1,000-3,000 °C or higher) flame impingement onto the tanks that later could compromise their structural integrity.

Since hydrogen tanks usually store hydrogen at high pressures such as 350 or 700 bars; these internal storage pressures create high stresses on the inner walls of the tanks and in a thermal event where the integrity of the composite material is compromised, the tanks may fail catastrophically with consequent explosion.

Clearly, due to the high pressure of the hydrogen stored in the tanks, the explosion of these latter could lead to severe/fatal injuries to the driver and vehicle passengers, to peoples in vicinity of the vehicle and/or in high damages of objects and properties in the vicinity of the vehicle.

Therefore, the need is felt to increase the safety in a fuel cell vehicle in order to avoid the above-mentioned drawbacks.

An aim of the present invention is to satisfy the above mentioned safety needs in a cost-effective, preemptive and optimized manner.

### SUMMARY OF THE INVENTION

The aforementioned aim is reached by a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of an exemplarily vehicle comprising a safety system according to the invention;
- Figure 2 is a top schematic view of a safety system according to the invention.

### DETAILED DESCRIPTION OF THE INVENTION

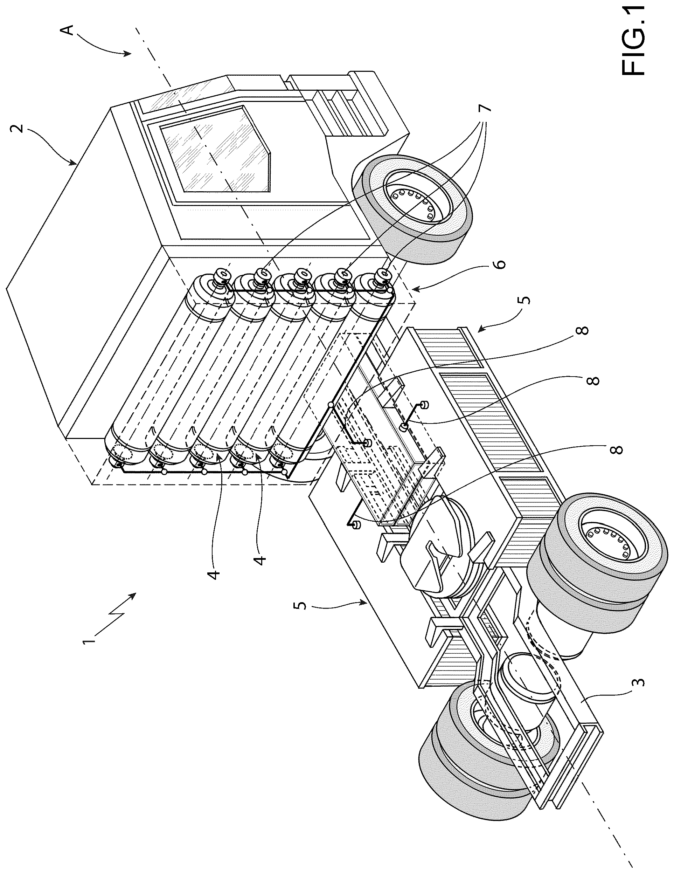

Figure 1 discloses an exemplarily vehicle 1 such as a commercial vehicle, for instance a truck. Vehicle 1 comprises a cab 2 carried by a chassis 3 extending over a longitudinal axis A.

The vehicle 1 comprises at least a tank 4 configured to store a compressed gaseous hydrogen within a defined pressure range and at least a battery pack 5 configured to store electrical batteries.

Preferably, the vehicle 1 is provided with a fuel cell module (not shown in detail) configured to generate electric energy on the base of hydrogen fuel. Therefore, tank 4 is configured to store hydrogen for feeding the fuel cell module and the battery pack 5 is configured to manage electric energy generated by the fuel cell module and used by operational systems (not shown) of the vehicle.

According to the invention, the vehicle 1 comprises a safety system 6 configured to discharge the at least one tank 4 if a critical condition related to thermal runaway of the battery pack 5 is detected.

In detail, such critical condition is a physical quantity related to the temperature within the battery pack 5. In further detail, such physical quantity is a temperature within the battery pack 5, in particular the temperature and/or the pressure of air/gases in the battery pack 5.

The safety system 6 advantageously comprises valve means 7 configured to control the fluid communication between the at least one tank 4 and the environment.

In particular, each tank 4 may comprise a plurality of valve means 7. In the disclosed embodiment, each tank comprises a pair of valve means 7 in particular located on opposite sides of the tank 4, in further detail along the longitudinal axis thereof.

Such valve means 7 are controlled according to the aforementioned critical condition. In detail, they are controlled according to the value of the physical quantity mentioned above, preferably the temperature and/or pressure.

Advantageously, valve means 7 are configured to move between a first, closed, configuration in which denies the fluid communication of hydrogen in the tanks to the environment if the aforementioned value is below a preset threshold value, and a second, opened, configuration in which fluid communication of hydrogen in the tanks to the environment is allowed if the aforementioned value is above a preset threshold value.

In the exemplarily disclosed embodiment, the valve mean 7 are preferably ON-OFF valves and in particular are thermally activated (e.g. TPRD valves),

Preferably, the valve means 7 are configured to move from the first to the second position if the physical quantity in the battery pack detects a temperature greater than 90-130 °C, in particular preset to 110 C°.

In detail, the safety system 6 comprises at least one conduit 8 configured to fluidly connect, i.e. thermally conduct thermal energy, the battery pack 5 to the valve means 7. Therefore, according to such advantageous embodiment, the means 7 are fluidly piloted between the first and second position by exhaust gases of the battery pack 5, e.g. by their transferred thermal energy.

In particular, the at least one conduit 8 comprises a hard piping and/or pre-bent piping configured to reduce the thermal dissipation through itself, therefore allowing the fluid coming from battery pack 5 to the valve means 7 at substantially the same temperature.

In particular, the at least one conduit 8 is fluidly connected from at least one exhaust port 5' of the battery pack 5 to the valve means 7.

In particular, the at least one conduit 8 is divided into a plurality of branches 8' configured to reach each valve means 7.

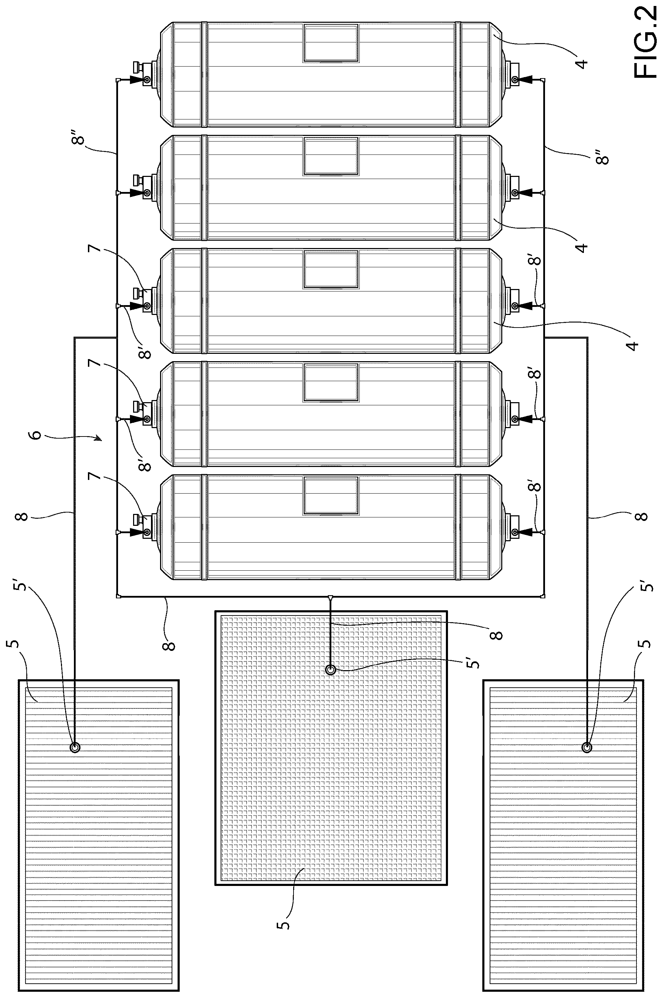

In further detail, as shown in figure 2, each battery pack 6 can be provided with a related conduit 8 fluidly connected to the valve means 7. In particular, the conduits 8 may collect in a collector section 8'' before branching in branches 8' to reach each valve means 7.

Alternatively, conduit 8 may allow fluidic communication to the valve means 7 of the tanks 4 that are most adjacent to the battery pack 5, thereby avoiding venting only of this latter without waste of hydrogen.

In a not shown embodiment, safety system 6 may comprise, instead of conduit 8, a wire realized in thermal conductive material and configured to transfer heat to the valve means 7. In such case, valve means are actuated solely by heat transfer from the wire to the valve means 7. Pyrolytic graphite, pyrolytic carbon or thermally annealed pyrolytic graphite.

The operation of the embodiment of the invention as described above is the following.

If a thermal runaway is occurring in one of the battery packs 6, then the exhaust gas may flow from port 5' through conduit 8 towards valve means 7. Then, till the temperature/pressure of the gases is below the preset threshold value, nothing occurs and the at least one tank 4 is isolated from environment. If the temperature/pressure of the gases is above the preset threshold value, valve means 7 allows venting of the at least one tank 4 thereby decreasing the pressure therein.

The operation is similar in case of presence of wire realized in thermal conductive material; indeed, in such embodiment, the actuation of valve means 7 is realized by the transfer or heat generated by exhaust gases in battery pack 6.

The temperature/pressure value is designed in function of the battery dimensions and tank dimensions in order to provide enough time to decrease the pressure in the at least one tank 4 below a safety threshold before loss of battery pack 6 integrity/fire ignition of the vehicle in the vicinity of the battery pack 6.

In view of the foregoing, the advantages of the safety system and the vehicle according to the invention are apparent.

Thanks to the proposed safety system it is possible to vent the at least one pressurized tank thereby reducing the safety risk of a tank explosion of this latter.

Accordingly, even if thermal runaway occurs it is avoided that the hydrogen tanks lose structural integrity and explode, preventing damage to properties or peoples around the vehicle.

Indeed, it is provided rapid detection of any thermal runaway onboard the vehicle, and pre-emptive triggering of the valve means on hydrogen storage vessels, such that the hydrogen tanks are depressurized ahead of a loss of structural integrity of the hydrogen storage tanks, due to heat or flames from said thermal runaway. In particular, the direct use of the exhaust gases and related thermal energy to pre-emptively trigger the venting of the tanks provides a cost-effective, compact and reliable system for venting the tanks.

Moreover, the use of either a fluid or heat conduit that is connected to all the tanks allows the pre-emptive venting of all tanks at the same time. In addition, the connection of the fluid or heat conduits coming from all battery packs further increase the reliability of the system.

Furthermore, the presence of more than one valve means allows to provide redundancy and to vent in a faster manner each tank.

It is clear that modifications can be made to the described safety system and vehicle which do not extend beyond the scope of protection defined by the claims.

For example, valve means may be of other typologies and controlled in a different manner. For instance, they may be electrically controlled on the base of data retrieved by sensor means housed in battery pack or they may be a plug configured to be melt by the thermal energy of the exhaust gases

Otherwise, they may be proportionally controlled valve by pressure of exhaust gas coming from the battery pack.

Clearly, number and typology of tanks, battery pack and therefore conduit topology may vary according to the specific need of the vehicle.

## Claims

1. Vehicle (1) comprising at least a battery pack (5) and at least a tank (4) for storing hydrogen, a fuel cell module electrically connected to said battery pack (5) and to said tank (4), said vehicle (1) comprising a safety system (6) at least one valve means (7) configured to assume at least a first position in which deny the fluid communication between said tank (4) and the environment and a second position in which allow the fluid communication between said tank (4) and the environment, said valve means (7) being controlled to move between the first and second positions in function of critical condition related to thermal runaway of the battery pack (5).

2. Vehicle according to claim 1, wherein said critical condition is reached when a physical quantity related to a temperature and/or pressure within said battery pack (5) is above a predetermined threshold quantity.

3. Vehicle according to claim 2, wherein said critical condition is reached when the temperature and/or pressure within said battery pack (5) is above a predetermined threshold temperature and/or pressure.

4. Vehicle according to any of the preceding claims, wherein said safety system (6) comprises a plurality of valve means (7) for each tank (4) of said vehicle (1).

5. Vehicle according to any of the preceding claims, wherein said valve means (7) comprises TPRD valve means.

6. Vehicle according to any of the preceding claims, further comprising at least one conduit (8) fluidly connecting said battery pack (5) to said valve means (7), said valve means (7) being controlled by the fluid temperature/pressure provided by said conduit (8) to move between said first and second positions.

7. Vehicle according to claim 6, wherein said conduit (8) fluidly connect an exhaust port (5') of said battery pack (5) to said valve means (7).

8. Vehicle according to claim 6 or 7, wherein said conduit (8) comprises a plurality of branches (8') fluidly connecting said at least one battery pack (5) to a plurality of valve means (7) of different tanks (4).

9. Vehicle according to any of claims 6 to 8, wherein each battery pack (5) comprises a conduit (8), said conduits (8) being fluidly connected to a collector (8") fluidly connected to said valve means (7).

10. Vehicle according to any of claims 1 to 5, further comprising at least one wire realized in thermal conductive material connecting said battery pack (5) to said valve means (7), said valve means (7) being controlled by the temperature provided by said wire to move between said first and second positions.

11. Vehicle according claim 10, wherein said wire is realized in pyrolytic graphite, pyrolytic carbon or thermally annealed pyrolytic graphite.
